**Europäisches Patentamt**

**European Patent Office**

**Office européen des brevets**

(11) Veröffentlichungsnummer: **0 118 767**
**A2**

(12) **EUROPÄISCHE PATENTANMELDUNG**

(21) Anmeldenummer: **84101306.3**

(22) Anmeldetag: **08.02.84**

(51) Int. Cl.³: **H 04 L 11/20**
**H 04 L 11/16**

(30) Priorität: **11.02.83 DE 3304823**

(43) Veröffentlichungstag der Anmeldung:
**19.09.84 Patentblatt 84/38**

(84) Benannte Vertragsstaaten:
**AT BE CH DE FR GB IT LI NL SE**

(71) Anmelder: **Siemens Aktiengesellschaft**
**Berlin und München Wittelsbacherplatz 2**
**D-8000 München 2(DE)**

(72) Erfinder: **von Sichart, Frithjof, Dr.**
**Karl-Theodor-Strasse 72**
**D-8000 München 40(DE)**

(72) Erfinder: **Eberspächer, Jörg, Dr.**
**Weissensteinstrasse 15**
**D-8000 München 60(DE)**

(54) **Verfahren für eine Fernmelde-, insbesondere Fernsprechnebenstellenanlage mit einem Datenübertragungsleitungssystem, insbesondere mit einem optischen Datenübertragungsleitungssystem.**

(57) Über ein Ringleitungssystem werden in periodisch sich wiederholenden Pulsrahmen Informationen übertragen. Die Pulsrahmen sind in zumindest zwei Unterrahmen unterteilt, wobei im ersten Unterrahmen die Informationen in einem kontinuierlichen Übertragungsverfahren und die Informationen im zweiten Unterrahmen im Paketverfahren übertragen werden. Der erste Unterrahmen ist in Zeitschlitzen unterteilt, die als Zeitkanäle jeweils einer Teilnehmeranschlußstelle für die Herstellung einer Verbindung, beispielsweise Sprachverbindung, zugeteilt werden. Im zweiten Unterrahmen sind die Zeitschlitze zu einem einzigen Datenkanal für die Übertragung von Datenpaketen zusammengefaßt. Der Zugriff zum zweiten Unterrahmen erfolgt mittels einer sogenannten "token-" Information. Als Datenpaket werden auch Informationen, welche eine Aussage über den Frei-/Belegzustand der Zeitkanäle im ersten Unterrahmen beinhalten und die zum Aktualisieren entsprechender Tabellen bei den Teilnehmeranschlußstellen dienen, übertragen.

FIG 6

0118767

SIEMENS AKTIENGESELLSCHAFT
Berlin und München

Unser Zeichen
VPA 83 P 1068 E

Verfahren für eine Fernmelde-, insbesondere Fernsprechnebenstellenanlage, mit einem Datenübertragungsleitungssystem, insbesondere mit einem optischen Datenübertragungsleitungssystem.

Die Erfindung bezieht sich auf ein Verfahren für eine Fernmelde-, insbesondere Fernsprechnebenstellenanlage, mit einem Datenübertragungsleitungssystem, insbesondere mit einem optischen Datenübertragungsleitungssystem, und mit unterschiedlichen Anschlußstellen, insbesondere mit Teilnehmeranschlußstellen, mit Verbindungsleitungsübertragungen und mit Endgeräten, welche alle für die Informationsübertragung zwischen zumindest zwei anschaltbaren Anschlußstellen unterschiedliche Verkehrseigenschaften hinsichtlich der Datenübertragungsmenge und -geschwindigkeit, sowie hinsichtlich des Übertragungsverfahrens, beispielsweise kontinuierliches Übertragungsverfahren (sogenanntes Stream-Verfahren) und/oder Paketverfahren (Burst-Verfahren) aufweisen und wobei zumindest das erste Verfahren auf dem Zeitschlitzverfahren beruht, bei dem periodisch sich wiederholende Zeitschlitze zu einem, eine bestimmte Datenmenge in einer vorgegebenen Zeit (zum Beispiel 1 024 Bits in 125 $\mu$s)zu übertragenden Pulsrahmen, in dem für diese die zeitliche Lage eindeutig definiert ist, zusammengefaßt werden und wobei die in den unterschiedlichen Verfahren übertragenen Daten über ein mit allen unterschiedlichen Anschlußstellen, insbesondere Teilnehmerstellen, Verbindungsleitungsübertragungen und Endgeräten, verbundene, gemeinsame Datenübertragungsleitungsbündel ausgetauscht werden, wozu über das Datenübertragungsleitungs-

Mt 1 Bo / 24.1.1983

bündel kontinuierlich eine ununterbrochene Folge von durch Anfangs- bzw. Endekennzeichen definierten, dem Pulsrahmen entsprechenden Speichervolumen den Anschlußstellen zur Verfügung stellbar ist.

Bei in der Kommunikationstechnik einzusetzendenDatenübertragungsleitungssystemen,beispielsweise optischen Datenübertragungsleitungssystemen,insbesondere für sogenannte lokale Netze (LAN), sind Teilnehmer und Geräte mit sehr unterschiedlichen Verkehrseigenschaften anzuschalten. Bei der Anschaltung von volldigitalen Endstellen, beispielsweise Fernsprechstationen, Videogeräte und dergleichen, sind kontinuierlich Dateninformationen zu übertragen. Daneben sind aber auch insbesondere im Rahmen der Automatisierung der Bürokommunikation Endgeräte anzuschalten, die einen stoßartigen Verkehr produzieren. Solche Geräte sind beispielsweise hochauflösende Graphik-Endgeräte, Datenbankprozessoren, Textendgeräte und dergleichen. Solche Geräte verlangen für Bruchteile von Sekunden nach einer Übertragungskapazität von mehreren Megabits pro Sekunde (MBit/s).

In einem Aufsatz von P. Zafiropoulo,E.H. Rothauser in Proceedings ICCC, 1972, Seite 309 bis 315,ist beschrieben, wie bei Ringsystemen ein kontinuierliches Übertragungsverfahren und ein Paketverfahren eingesetzt werden kann. Bei dem dort beschriebenen System erfolgt die Zuteilung der Zeitschlitze für das kontinuierliche Übertragungsverfahren so, daß eine sendebereite Station anhand der Beobachtung eines in jedem Zeitschlitz befindlichen "Besetzt"-Bits einen freien Zeitschlitz findet und fügt dann in diesen Zeitschlitz die Zieladresse des Empfängers ein. Wenn dieser nicht belegt ist, antwortet er in dem gleichen Zeitschlitz mit einer entsprechenden Information, so daß über diesen Zeitschlitz eine Verbindung zustande kommt. Diese Signalisierung im Zeitschlitz hat aber den Nachteil, daß für die in neueren digitalen Kommunikationssystemen erforderlichen Signalisierungsaktivitäten während der aufgebauten Verbindung wenig oder kein Platz zur Verfügung steht. Ferner besteht hier der Nachteil, daß durch die Mitführung des erwähnten "Besetzt"-Bits und der Absender- und Zieladresse in jedem Zeitschlitz die Übertragungskapazität nochmals verschlechtert wird. Für die Übertragung von Datenpa- keten bei diesem System ist ein getrenntes Datenübertragungsleitungsbündel erforderlich, bei dem der Zugriff in der gleichen Weise mit einem Besetzt-Bit er- folgt. Bei diesem bekannten System ist die Kombination des kontinuierlichen Übertragungsverfahrens mit dem Paketverfahren für die Übertragung über ein Datenübertragungsleitungsbündel nicht gelöst.

Ferner ist aus einem Aufsatz von R. Renoulin und I. Favre in "Proceedings International conference on local computer networks", 1982, Florenz, Seite 23 bis 37, bekannt, wie für ein optisches Ringsystem ein Zeitschlitzrahmen in zwei Unterrahmen aufgeteilt wird. Dabei dient der erste Unterrahmen als Rahmen für die kontinuierliche Übertragung von Informationen, während im zweiten Rahmen Datenpakete gesendet werden. Die Zuteilung des zweiten Unterrahmens erfolgt mittels eines ständig in diesem Kanal mitgeführten Steuerfeldes, welches Informationen enthält, die aussagen, ob das Datenfeld des betreffenden Unterrahmens frei oder belegt ist. Nur wenn eine Freikennzeichnung vorhanden ist, kann ein Datenpaket eingegeben werden. Bei diesem Verfahren muß also in jedem Unterrahmen eine solche Frei-/Besetztkennzeichnung vorhanden sein und muß die Adresse der belegenden Stelle und des Zieles beigegeben werden. Auch hierdurch geht unnötig viel Übertragungskapazität verloren.

Ferner ist durch die europäische Patentanmeldung
0 054 077 ein Verfahren bekannt, bei dem keine rahmensynchrone Zeitschlitzstruktur verwendet wird, aber doch
Informationen kontinuierlich und in Pakete übertragen
werden. Der Zugriff erfolgt hier auch mittels der Übertragung einer Zugriffsberechtigungsinformation über
das Datenübertragungsleitungsbündel und zwar so, daß
eine sendebereite Station dann senden kann, wenn diese
Zugriffsinformation bei ihr eintrifft. Ist dies der
Fall, so kann ein Datenpaket von dieser Station übertragen werden. Kontinuierliche Daten können bei diesem
Verfahren nur in eingeschränkter Form übertragen werden,
da bei stärkerer Verkehrsbelastung auf dem Ring ein
periodischer Zugriff innerhalb einer vorgeschriebenen
Zeit nicht gewährleistet ist. Je größer die Datenpakete
für nicht kontinuierlichen Verkehr sind, je mehr die
Zeitverschiebung ist. Hierdurch wird dann beispielsweise der Sprachverkehr für Ferngespräche unmöglich. Um
dennoch den kontinuierlichen Verkehr gewährleisten zu
können ist bei diesem System eine zusätzliche Monitorschaltung erforderlich. Diese sorgt aufgrund von Anforderungen der die kontinuierlichen Informationen übertragenden Stationen dafür, daß in periodischen Abständen
eine Unterbrechung des normalen Zugriffs für die Übertragung von Datenpaketen möglich wird. Es wird dann
anstelle der normalen Zugriffsinformation eine besondere
Information gesendet, die nur den Stationen mit kontinuierlichem Verkehr den Zugriff gewährleisten.

Die Aufgabe der vorliegenden Erfindung besteht darin
ein einfaches Verfahren zu bilden, bei dem sowohl der
kontinuierliche Verkehr in einfacher Weise gewährleistet wird, als auch Datenpakete beliebiger Länge von
jeder Station zu jeder Station übertragbar sind.

Dies wird dadurch erreicht, daß ein derartiger Pulsrahmen in wenigstens zwei Unterrahmen unterteilt wird,
wobei die in den unterschiedlichen Unterrahmen zu übertragenden Datenmengen beliebig aufgeteilt sind und im
ersten Unterrahmen die von den Zeitschlitzen gebildeten
Einzeldatenkanäle voneinander unabhängig und für kontinuierlichen, nicht paketierten Datenaustausch, insbesondere Sprachübertragung, über das entsprechende Datenübertragungsleitungsbündel belegbar sind, während
im zweiten Unterrahmen die Zeitschlitze einen einzigen
Datenkanal für die Übertragung von Datenpaketen über
dasselbe Datenübertragungsleitungsbündel bilden und
wobei ferner die Belegung von Zeitschlitzen (Zeitkanälen) im ersten Unterrahmen durch eine Anschlußstelle
in Abhängigkeit von in einem der beiden Unterrahmen
übertragenen Informationen für den Frei- bzw. Belegt-
Zustand der vorhandenen Zeitschlitze (Zeitkanäle) des
ersten Unterrahmens erfolgt.

Auf diese Weise ist es möglich die Belegung von Zeitschlitzen (Zeitkanälen) für das Führen von beispielsweise Sprechverbindungen, Videoübertragungsverbindungen und dergleichen in einfacher Weise in Abhängigkeit
von bei geteilten Informationsübertragungsrahmen
in einem der vorgesehenen Unterrahmen
dieses Rahmens übertragenen Informationen hinsichtlich
des Frei- bzw. Belegtzustandes vorzunehmen. Das Zugriffssystem ist sowohl bei ringförmigen Netzstrukturen
als auch bei sternförmigen Netzstrukturen in einfacher
Weise verwendbar. Außerdem sind alle Anschlußstellen
gleichberechtigt und es gibt bei der Zuteilungssteuerung keine Bedingungen hinsichtlich übergeordneter Funktionen bestimmter Anschlußstellen.

Gemäß einer weiteren Ausbildung der Erfindung ist das
Verfahren so ausgebildet, daß in einem einzigen Einzeldatenkanal aller der einer Anschlußstelle in einem bestimmten Zeitzyklus angebotenen Einzelkanäle in dem entsprechenden Unterrahmen ein einen Zugriff zu dem zweiten, als Einzeldatenkanal ausgebildeten Unterrahmen angebotenes Zugriffskennzeichen (token) in der einer, einen Verbindungsaufbau anfangenden bzw. eine Verbindung beendenden Anschlußstelle zugeordneten Anschlußschaltung       eine Eingabe von Dateninformationen im zweiten, als Einzeldatenkanal betriebenen Unterrahmen, welche die Belegung bzw. die Freigabe eines Zeitschlitzes (beispielsweise Zeitkanal m-1) im ersten Unterrahmen kennzeichnen und welche Dateninformationen über das gemeinsame Datenübertragungsleitungsbündel von Anschlußstelle zu Anschlußstelle zwecks Aktualisierung einer, die Frei-/Belegtzustände der Zeitschlitze im ersten Unterrahmen beinhaltenden Tabelle überträgt, mittels der dieser Anschlußschaltung zugeordneten Schaltmittel veranlaßt.


Auf diese Weise ist es möglich einen vorhandenen Einzeldatenkanal nicht nur für beliebige Datenübertragung einer Anschlußstelle zu verwenden, sondern diese Datenübertragung auch dazu zu nutzen in diesem Datenkanal, der als zweiter Unterrahmen vorgesehen ist, jeweils/zugeordneten Zeitschlitze von des anderen Unterrahmens ein freier Zeitschlitz belegbar zu machen und außerdem an Anschlußstellen vorhandene Tabellen, in denen die Frei-/Belegtzustände der Zeitschlitze des genannten Unterrahmens gekennzeichnet sind, zu aktualisieren.

Der hierfür benötigte Vorgang bedingt keine wesentlichen, abweichenden Verfahrensmaßnahmen, da der Zugriff zum Einzeldatenkanal ohnehin vorhanden ist und über den Einzeldatenkanal Informationen für zumindest alle beteiligten Anschlußstellen übertragbar sind.


Gemäß einer weiteren Ausbildung der Erfindung ist das Verfahren auch so ausbildbar, daß in einem einzigen
Datenkanal der einer Anschlußstelle in einem bestimmten
Zyklus angebotenen Datenkanäle ein einen Zugriff zu
einem bestimmten Zeitschlitz (Zeitkanal) der Vielzahl
in einem ersten Unterrahmen vorhandenen Zeitschlitze
(Zeitkanäle) für die Herstellung von kontinuierlich
für bestimmte Zeit durch zwei bzw. mehr als zwei Anschlußstellen für Nachrichtenaustausch, insbesondere
Sprache, Video und dergleichen, belegbaren Übertragungswege ermöglichen des Zugriffskennzeichen (token) in der
einer, einen Verbindungsaufbau anfangenden bzw. beendenden Anschlußstelle zugeordneten Anschlußschaltung die Eingabe von Dateninformationen in diesem ganz
bestimmten Zeitschlitz die Belegung bzw. die Freigabe
eines Zeitschlitzes der genannten mehreren, anderen
Zeitschlitze im ersten Unterrahmen steuert und dabei
Dateninformationen auch zu allen bzw. nur zu bestimmten an das gemeinsame Datenübertragungsleitungsbündel
angeschalteten Anschlußstellen zwecks Aktualisierung
einer, die Frei-/Belegtzustände der genannten Zeitschlitze im ersten Unterrahmen beinhaltenden Tabelle
übertragen werden.

Auf diese Weise kann gemäß einem anderen Ausführungsbeispiel der Erfindung auch ein bestimmter Zeitschlitz
mehrer er vorhandener Zeitschlitze für die Übertragung
von kontinuierlichen, für eine bestimmte Zeit für Nachrichtenaustausch zu belegenden Zeitkanäle zur Belegung
und auch zur Dateninformationsübertragung hinsichtlich
der Frei-/Belegtzustände verwendet werden. Das Zugriffsverfahren für den bestimmten Zeitschlitz entspricht dabei dem Zugriffsverfahren für den Einzelkanal,
so daß auch bei diesem Verfahren die notwendigen Steuerablaufvorgänge einfach im System unterbringbar sind.

Gemäß einer weiteren Ausbildung der Erfindung führt
die Belegung eines Zeitschlitzes (Zeitkanals) nur bei Wiedereintreffen der eingegebenen Informationen betreffend der Belegung bzw. Freigabe eines Zeitschlitzes an der ursprünglich eingebenden Anschlußstelle zur endgültigen Belegung bzw. zur endgültigen Freigabe des betreffenden Zeitschlitzes.

Hierdurch ist in einfacher Weise sichergestellt, daß die Belegung eines freien bzw. die Freigabe eines belegten Zeitschlitzes zuerst quittiert wird, bevor entsprechende Informationen zu anderen Anschlußstellen zwecks Aktualisierung der Tabellen weitergegeben werden.

Gemäß einer weiteren Ausbildung der Erfindung sind die vorhandenen Teilnehmerstellen und/oder Verbindungsleitungsübertragungen und Endgeräte zu Gruppen zusammengefaßt und nur bei einer bzw. bei einigen wenigen dieser Stellen ist ein Speicher zur Aufnahme der Tabelleninformationen für belegte und/oder freie Zeitschlitze (Zeitkanäle) vorhanden und bei jeder Teilnehmerstelle bzw. Verbindungsleitungsübertragung bzw. bei jedem Endgerät ohne vorhandene Tabelle ist gekennzeichnet, bei welcher Stelle bei Belegen eines freien Zeitschlitzes (Zeitkanals) die Tabelle für die Zustandsfeststellung des zu belegenden Zeitschlitzes (Zeitkanals) zur Verfügung steht.

Auf diese Weise kann die Anzahl der benötigten Tabellen gegebenenfalls reduziert werden.

Nachstehend sind anhand der Zeichnungen Ausführungsbeispiele der Erfindung beschrieben.

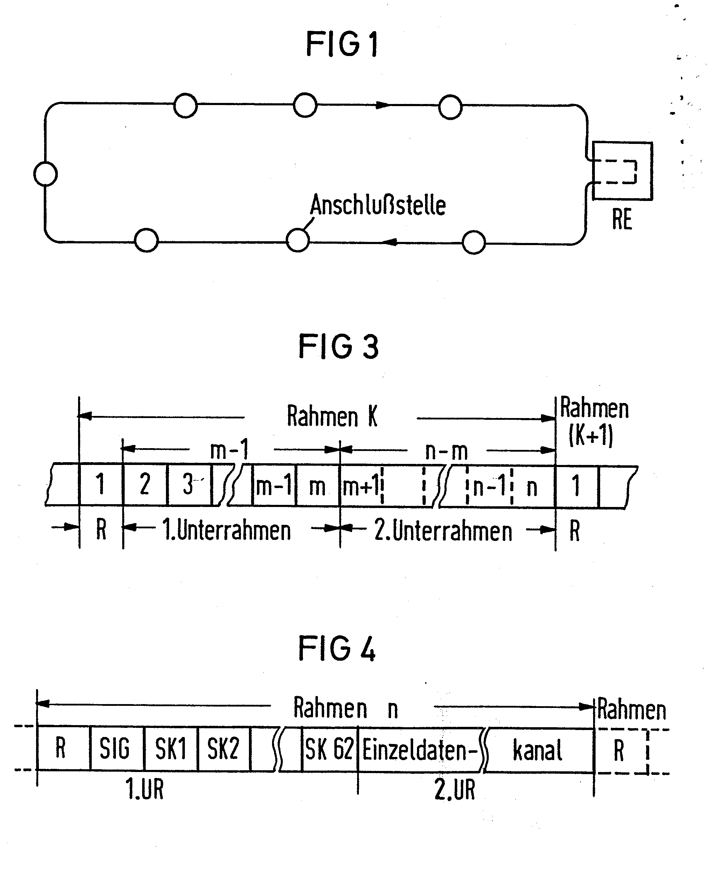

In der FIG 1 ist ein Grundring in einem rahmensynchronen System mit Rahmenausgleichseinheit gezeigt, mittels welchem ein lokales Netz für Sprach- und Datenübertragung, beispielsweise in einer Nebenstellenanlage gebildet werden kann.

Anhand der FIG 2a - 2d ist das beim vorliegenden Verfahren angewendete Zugriffsverfahren (token) erläutert.

In der FIG 3 ist die Rahmenstruktur des erfindungsgemäßen Verfahrens, des sogenannten Hybrid-Verfahrens gezeigt.

Die FIG 4 zeigt eine alternative Rahmenstruktur.

In der FIG 5 ist ein Prinzipschaltbild einer Teilnehmeranschlußstelle gezeigt, die am rahmensynchronen Ring angeschlossen ist.

In FIG 6 sind weitere Einzelheiten der Teilnehmeranschlußstelle gemäß FIG 6 gezeigt.

In FIG 7 ist der je Grundring erforderliche Rahmenausgleichsbaustein in Einzelheiten dargestellt.

Bei modernen Bürokommunikationsanlagen, in denen Daten unterschiedlichster Art übertragen werden müssen und zwar insbesondere Daten, die kontinuierlich übertragen werden und Daten, die mit höherer Geschwindigkeit zu übertragen sind, werden unterschiedliche Übertragungsverfahren und Zugriffsverfahren verwendet. Bei derartigen Bürokommunikationsanlagen werden beispielsweise Sprachinformationen, Videoübertragungsinformationen und dergleichen                          · für bestimmte Verbindungszeiten kontinuierlich übertragen. Diese Kontinuierlichkeit ist Voraussetzung für die Übertragungsqualität der Sprache bzw. der Videoinformationen. Andererseits sind in derartigen Bürokommunikationsnetze auch Datenblöcke beliebiger Länge,

beispielsweise Datenbankinhalte, mit höherer Geschwindigkeit und nicht kontinuierlich zu übertragen. Ein solches lokales Netzwerk kann entweder aus mehreren miteinander verknüpften Grundringen oder aber auch aus
Schleifensysteme bestehen. Im Prinzip ist jede beliebige
Art von Netztopologie möglich, d.h. sowohl vermascht,
als auch sternförmig, als auch kreisförmig, als auch
baum- oder busförmig. Voraussetzung für den vorliegenden Anmeldungsgegenstand ist nicht unbedingt die Ringstruktur. Die beschriebenen Ausführungsbeispiele gehen
aber von der Ringstruktur aus. In der FIG 1 ist ein
Grundring im rahmensynchronen System mit einer Rahmenausgleichseinheit RE gezeigt. Die Anzahl am Grundring
anzuschließenden Anschlußstellen ist abhängig von der
Anzahl Zeitschlitzen bzw. Zeitkanälen die in einem
Pulsrahmen für die Verbindungsherstellung zur Verfügung
stehen, sowie vom geplanten Verkehrswert.

Bevor auf die Rahmenstruktur eingegangen wird, ist anhand der FIG 2a - 2d das angewendete Zugriffsverfahren
erläutert. Über den Ring wird eine durch die Länge des
Ringes bestimmte, ununterbrochene Folge von Pulsrahmen
übertragen, wobei jeder Pulsrahmen beispielsweise aus
128 Zeitschlitzen mit je acht Datenbits besteht, so daß
insgesamt in einem Pulsrahmen 1.024 Bit übertragbar
sind. Die Abtastfrequenz ist z.B. so gewählt, daß ein Pulsrahmen innerhalb 125 µs Perioden übertragbar sind. Hieraus ergibt sich also pro Zeitschlitz, d.h. pro Zeitkanal eine Bitfolgefrequenz von 64 KBit/s. Zieht man
jetzt auch noch die FIG 3 zur weiteren Erläuterung hinzu, so kann man sehen, daß ein Rahmen K mit 1 bis n
Zeitschlitzen wie folgt unterteilt wird. Und zwar dient
der jeweils erste Zeitschlitz, bezeichnet mit R, zur
Rahmensynchronisierung, während die Zeitschlitze 2 bis
m, d.h. also m-1 Zeitschlitze einen ersten Unterrahmen

bilden und die Zeitschlitze m+1 bis n d.h. also n-m Zeitschlitze als zweiter Unterrahmen bezeichnet wird. Die im ersten Unterrahmen vorgesehenen Zeitschlitze, Zeitkanäle, dienen der kontinuierlichen Übertragung von Informationen, also der Sprachübertragung,Video- übertragung und dergleichen, während die Zeitschlitze des zweiten Unterrahmens zu einem gesamten Einzeldatenkanal zusammengefaßt sind. Die Zeitschlitze des ersten Unterrahmens werden jeweils einer Verbindung zugeteilt. Der Einzeldatenkanal des zweiten Unterrahmens wird jeweils einer einzigen Verbindung für die schnelle Datenübertragung zugeordnet. Um den Zugriff zu diesem Datenkanal zu bekommen, wird das anhand der FIG 2a - 2d gezeigte Zugriffsverfahren verwendet.

In den aufeinanderfolgenden Pulsrahmen, die jeweils an einer Anschlußstelle aufeinanderfolgend vorbeilaufen sind jeweils also zwei Unterrahmen vorhanden und jeweils nur in einem einzigen Unterrahmen ist ein Zugriffskennzeichen als Freikennzeichen vorhanden, siehe FIG 2a. In FIG 2b ist angenommen, daß die Station A das Zugriffskennzeichen behält und Daten sendet, beispielsweise zur Anschlußstelle C. Aus der FIG 2c geht hervor, daß beim zweiten Umlauf die von der Anschlußstelle A zur Anschlußstelle C adressiert übertragenen Daten dort kopiert werden und das Datenpaket unverletzt zu der Anschlußstelle A zurückkehrt, wo es absorbiert wird. Nach Beendigung der Übertragung des Datenpaketes, d.h. also praktisch nach Empfang des eigenen Paketkopfes sendet die Anschlußstelle A ein erneut generiertes Zugriffkennzeichen womit gekennzeichnet sein soll, daß der Datenkanal für eine andere Anschlußstelle zur Verfügung steht. Dieses Verfahren ist beispielsweise in der Zeitschrift "Telcom Report 5", 1982, Heft 2, Seite 66 bis 71 sowie auch in der US-PS 3. 597.594 beschrieben. Gegenstand der erfindungsgemäßen Anordnung ist die Verwendung dieses Zugriffsverfahrens zur Belegung freier Zeitschlitze für die kontinuierliche Übertragung von bestimmten Informationen, beispielsweise Sprachinformationen und Videoinformationen.

Mit der vorgesehen Unterteilung des Pulsrahmens K nach FIG 2 in zumindest zwei Unterrahmen können auch unterschiedliche Übertragungsverfahren gleichzeitig durchgeführt werden. Das kontinuierliche Übertragungsverfahren (sogenanntes Stream-Verfahren) beruht auf dem normalen, bekannten Zeitschlitzverfahren, wie es in der PCM-Technik verwendet wird. Es handelt sich dort um periodisch sich wiederholende Zeitschlitze und es kann eine bestimmte Datenmenge in einer vorgegebenen Zeit innerhalb des Pulsrahmens übertragen werden. Die zeitliche Lage der Zeitschlitze, auch mit Zeitkanäle bezeichnet, ist eindeutig definiert. In aufeinanderfolgenden Pulsrahmen werden jeweils in einem einer Verbindung zugeordneten Zeitschlitz bzw. Zeitkanal die für diese Verbindung notwendigen Informationen, Sprachinformationen bzw. Videoinformationen und dergleichen, übertragen. Im zweiten Unterrahmen des gleichen Pulsrahmens sind die Zeitschlitze zu einem Einzelkanal zusammengefaßt und in diesem Einzelkanal können Dateninformationen im sogenannten Paketverfahren (Burst-Verfahren) übertragen werden. Für die Übertragung von Datenpaketen können beliebig viele Unterrahmen in aufeinanderfolgenden Pulsrahmen verwendet werden. Der Zugriff zu einem derartigen Unterrahmen erfolgt mittels des vorstehend beschriebenen Zugriffsverfahrens. Dies bedeutet, daß in einem Unterrahmen ein Zugriffskennzeichen von Anschlußstelle zu Anschlußstelle weitergereicht wird und die Anschlußstelle den Zugriff bekommt, die zuerst dieses Zugriffszeichen "behält". Diese Anschlußstelle kann dann ein Datenpaket zu einer adressierten Empfangsstelle übertragen und bei Eintreffen des Paketkopfes bei der eigenen, sendenden Stelle wird dann wieder ein neues Zugriffskennzeichen in den zweiten Unterrahmen weitergegeben. Jetzt hat eine andere Anschlußstelle Zugriff zu dem Einzeldatenkanal.

In diesem Einzeldatenkanal sind beliebige Daten übertragbar. Jede Steuerung jeder Anschlußstelle ist jetzt derart ausgerichtet, daß der Einzeldatenkanal auch dann angefordert wird, wenn eine Anforderung für die Belegung eines Zeitschlitzes bzw. Zeitkanals zwecks Herstellung einer Verbindung zu einer Anschlußstelle des eigenen Grundringes bzw. eines übergeordneten Ringes oder eines anderen Grundringes oder zu einer Anschlußstelle außerhalb des Systems abgegeben wird. Der Zugriff erfolgt in der gleichen Weise wie bei der Anforderung für die Übertragung eines Datenpaketes. Falle der Belegung des Einzeldatenkanals bei Auffinden des Zugriffskennzeichens erfolgt die Belegung eines freien Zeitschlitzes derart, daß zunächst anhand eines an der Anschlußstelle vorhandenen Speichers und der innerhalb des Speichers vorhandenen Tabelle ein Zeitschlitz festgestellt wird, der als frei gekennzeichnet ist. Die Adresse dieses Zeitschlitzes sowie der eigenen Anschlußstelle wird als Datenpaket in dem Dateneinzelkanal des zweiten Unterrahmens eines Pulsrahmens bzw. aufeinanderfolgender Pulsrahmen gegeben. Diese Informationen werden von Anschlußstelle zu Anschlußstelle weitergereicht und an jeder Anschlußstelle dazu verwendet die in dort ebenfalls in Speichern vorhandenen Tabellen zu aktualisieren, d.h. dort den jetzt belegten Zeitschlitz anstelle als frei nunmehr als belegt zu kennzeichnen. Wenn der Paketkopf dieses Datenpakets bei der ursprünglich sendenden Anschlußstelle erneut eintrifft,wird erneut ein Zugriffskennzeichen im betreffenden Unterrahmen des Einzeldatenkanals eingegeben und die betreffende Anschlußstelle hat den von ihr belegten Zeitschlitz für die Herstellung beispielsweise einer Fernsprechverbindung zur Verfügung. Es werden die hierzu erforderlichen Daten/Adressen eingegeben. Die in FIG 4 dargestellte Rahmenstruktur für Schmalbandteilnehmerringe weicht von der Rahmenstruktur nach FIG 3 insoferne ab, als zusätzlich im ersten Unterrahmen ein Signalisierungsschlitz bzw. Signalisierungskanal vorgesehen ist. Dieser Signalisierungskanal kann in ähnlicher Weise wie der Einzeldatenkanal auch zur Belegung eines freien Zeitschlitzes für die Verbindungsherstellung herangezogen werden. In diesem Fall ist in dem Signalisierungszeitschlitz ebenfalls ein Zugriffskennzeichen vorhanden, welches es einer Anschlußstelle ermöglicht den Zugriff zu diesem Zeitschlitz direkt zu nehmen, wenn eine Anforderung für eine abgehende Verbindung abgegeben wird. Wird in diesem Falle über das Zugriffskennzeichen der entsprechende Zeitschlitz zugeteilt, so wird auch jetzt eine Kennzeichnung des zu belegenden Zeitschlitzes von Anschlußstelle zu Anschlußstelle weitergereicht und bei jeder Anschlußstelle in dem betreffenden Speicher die vorhandene Tabelle für Frei-/Belegtzustände aktualisiert. Bei erneutem Eintreffen des Kopfes des Datenpaketes bei der den Anruf einleitenden Anschlußstelle wird von dieser ein erneutes Zugriffskennzeichen in dem betreffenden besonderen Zeitschlitz eingegeben. Jetzt kann die Anschlußstelle in dem jetzt belegten Zeitschlitz die Informationen für die Verbindungsherstellung eingeben.

Alle Anschlußstellen sind prinzipiell gleichartig in Bezug auf die Zuteilungssteuerung. Im beschriebenen Beispiel ist der Nachrichtenfluß über die Datenübertragungsleitung, die in einem Ring geschaltet ist, einfach gerichtet (unidirektional). Als Datenübertragungsleitungsbündel können sowohl Kupferleitungen als auch Lichtwellenleiter, Koaxialkabel oder verdrillte Adernpaare verwendet werden. Die einzige gemeinsame Einheit ist die Rahmenausgleichseinheit. Die Rahmenausgleichseinheit RE nach FIG 1 bewirkt in den rahmensynchronen Systemen den erforderlichen Ausgleich der physikalischen Laufzeit im Ring auf ein ganzzahliges Vielfaches der Rahmendauer. Wie bereits anhand der FIG 3 beschrieben, ist im ersten Zeitschlitz R ein Rahmensychronisierungswort untergebracht. Die jeweilige Einblendung dieses Rahmensynchronisierungswortes erfolgt von der vorstehend erwähnten Rahmenausgleichseinheit.

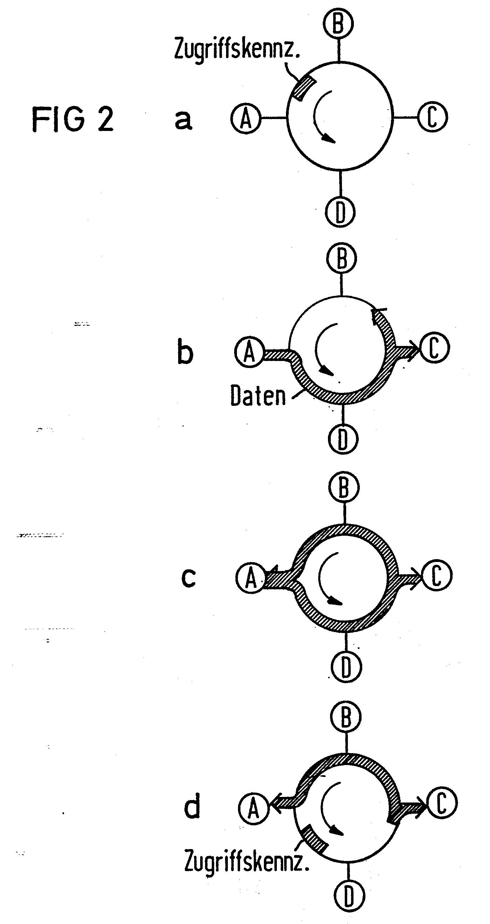

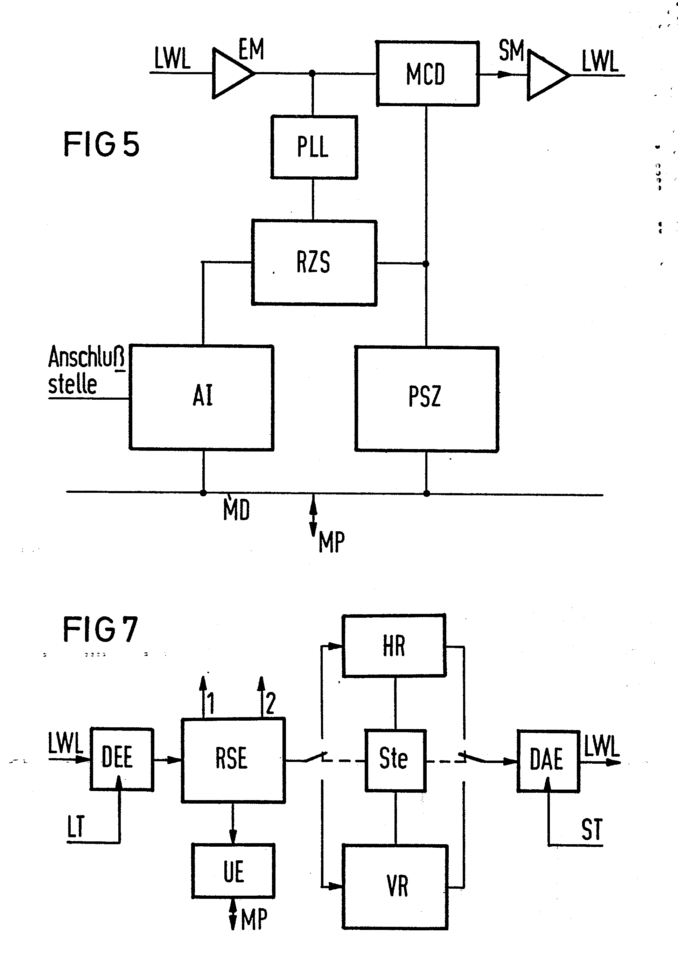

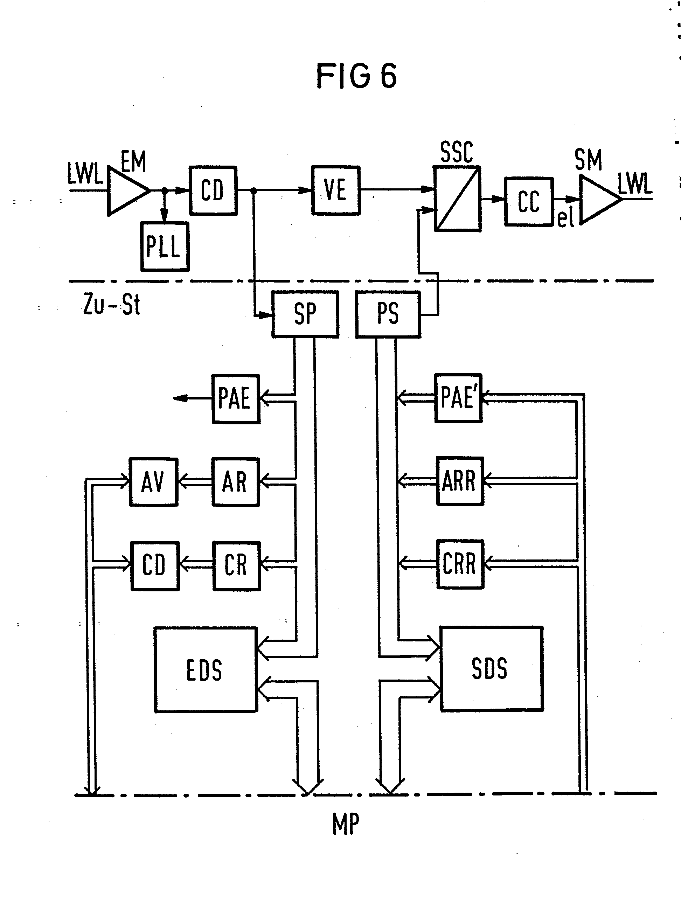

In den Zeitschlitzen des Unterrahmens können sowohl Dateninformationen empfangen als auch gesendet werden. Dies bedeutet also, daß für eine Sprachverbindung für die in beiden Richtungen zu übertragenen, z.B. der Sprache, entsprechenden Dateninformationen ein Zeitschlitz ausreicht. Wenn angenommen wird, daß im Rahmen K nach FIG 3 n gleich 128 und m gleich 64 ist, so ergeben sich als Gesamtdatenmenge für den Unterrahmen 4,096 MBit/s. Wie nachstehend anhand der FIG 5 - 7 beschrieben ist erkennt die Logik jeder Anschlußstelle durch Abzählen des Rahmensynchronisierungsschlitzes einschließlich der Zeitschlitze des ersten Unterrahmens auch den Anfang des zweiten Unterrahmens. Wird als Übertragungscode den an sich bekannten differentiellen Manchestercode verwendet, so lassen sich beim beschriebenen Zugriffsverfahren Anfang und Ende eines Paketes über sogenannte Code-Verletzungen erkennen. Ein vollständiges Datenpaket von beliebiger Länge erstreckt sich über mehrere Rahmen K und beginnt und endet mit den vorgenannten "Code-Verletzungs-Kennzeichnungen". Das Datenpaket wird exakt periodisch durch den Zeitschlitz für die Rahmensynchronisierung und den ersten Unterrahmen unterbrochen. Hierzu ist eine besondere Kennzeichnung im zweiten Unterrahmen nicht erforderlich.

Aus der FIG 5 geht hervor, daß sich die jeweiligen
Anschlußstellen,die im Ringsystem angeordnet sind aus
folgenden funktionell wesentlichen Teile bestehen:

a) einem optischen Empfangsmodul EM und einem optischen
Sendemodul SM einschließlich einer Taktrückgewinnungseinheit PLL (Phase Lock-Loop). Das Empfangsmodul empfängt Signale über den Lichtwellenleiter
LWL und das Sendemodul sendet diese Signale über
den Lichtwellenleiter LWL weiter. Alle empfangenen/
gesendeten  Signale laufen ununterbrochen über den
Ring und werden von jeder Anschlußstelle nur kopiert,
d.h. also nicht entnommen.

b) Eine Rahmensynchronisierungs- und Zeitschlitzsteuereinheit RZS, deren wesentliche Bestandteile Vergleichseinheiten und Zähler sind.

c) Eine Protokollsteuerung für die Zugriffskennzeichen
PSZ mit einem Anschluß an einer Datenübertragungsleitung, die zu einem der Anschlußstelle zugeordneten
Mikroprozessor MP führt.

d) Mit der Rahmensynchronisierungs- und Zeitschlitz-
Steuereinheit ist ferner eine Anschlußschaltung AE
verbunden, die ebenfalls über die Datenübertragungsleitung MD mit dem Mikroprozessor MP zwecks Steuerung
der Durchschaltung zu Endgeräten beispielsweise Datenendgeräte, Fernsprechendgeräte, Videoendgeräte
und dergleichen verbunden.

Mit Eintreffen der Dateninformationen eines Pulsrahmens
wird von der Taktbestimmungseinrichtung PLL dessen/be-
                                              Takt
stimmt, indem die Zeitschlitze abgezählt werden. Die
Protokollsteuerung für die Zugriffskennzeichen überwachen den zweiten Unterrahmen auf das
Vorhandensein des Zugriffskennzeichens für denFall,
für den von einem Endgerät die Belegung eines freien
Zeitschlitzes veranlaßt ist. Die jeder Anschlußstelle
zugeordnete und im Ring geschaltete Codierungs-/Decodierungslogik besorgt die Umkodierung in Binärzeichen     sowie die Erkennung der Codeverletzungen für
die Feststellung der Anfangs- und Endekennzeichen von
Datenpaketen. Alle Vorgänge, die mit der Festellung
des Zugriffskennzeichens, seiner vorübergehenden Löschung und seine Wiedereingabe nach Ende eines Datenpaketes zusammenhängen werden von dem zugeordneten Mikroprozessor MP beherrscht. Die gesendeten Datenpakete
können von unterschiedlichen, über die Anschlußeinrichtung AE angeschaltete Endgeräte zum Datenübertragungsleitungsbündel, d.h. zum Ring, zwecks Senden gegeben
werden. Dementsprechend werden auch in der Anschlußeinrichtung ankommende Datenpakete, der gekennzeichneten
Art des empfangenden Endgerätes entsprechend einem solchen Endgerät zugeführt. Dem Mikroprozessor MP jeder
Anschlußstelle ist eine Tabelle zugeordnet, in der die
Belegt- und Freizustände der Zeitschlitze gekennzeichnet sind und welche Tabelle durch empfangene Datenpakete
einer sendenden Anschlußstelle, welche einen Zeitschlitz belegt bzw. freigibt, aktualisiert wird. In
dem Datenpaket genügt die Kennzeichnung des Zeitschlitzes
und der Tatsache ob eine Freigabe bzw. eine Belegung
zu erfolgen hat. Es besteht aber auch die Möglichkeit
die vollständige Tabelle mit der Schlitzbelegung in
dem Datenpaket zu tun und von Teilnehmer zu Teilnehmer
weiterzureichen um damit den Aktualisierungsvorgang
an den einzelnen Anschlußstellen zu vereinfachen. Die
Aktualisierung erfolgt jeweils anschlußstellenindividuell.

Es besteht aber auch die Möglichkeit die Zuteilung der
Zeitschlitze zu   zentralisieren, in dem nur an bestimm-

ten Anschlußstellen die Tabellen für den Belegt-/Freizustand verwaltet werden. In diesem Falle ist bei
Empfang eines Zugriffskennzeichens bei einer einen
freien Zeitschlitz anfordernden Anschlußstelle von dieser Anschlußstelle ein Datenpaket abzugeben, in dem
der Wunsch zur Belegung eines freien Zeitschlitzes samt
der eigenen Adresse enthalten ist und womit dann von
der verwaltenden Anschlußstelle eine Adresse eines
freien Zeitschlitzes hinzugegeben wird, wodurch dann
die einen Zeitschlitz belegenden Anschlußstelle beim
Empfang des selbstgesandten Datenpaketes die Zuteilung
des Zeitschlitzes erhält.

In der FIG 7 sind Einzelheiten der Protokollsteuerung
für die Zugriffskennzeichen PSZ der einer Anschlußstelle zugeordneten Einheiten dargestellt. Hieraus ist ersichtlich, daß die eingehenden Informationen zunächst
über einen Serienparallelwandler SP eingehen und über
einen Parallel-Serienwandler wieder ausgegeben werden.
Die Ausgabe erfolgt zu einer Sendeschaltung SSC, welche
die über den Ring laufenden Informationen und die
einzugebenden Informationen miteinander verknüpfen.
Von dieser Sendeschaltung gehen die Informationen über
einen Codierer/Decodierer CD zu der Sendeeinrichtung SM
und dann über das Datenübertragungsleitungsbündel, d.h.
hier über einen einzigen Lichtwellenleiter LWL. Die
bei der Anschlußstelle eintreffenden Informationen
gelangen über die Empfangseinrichtung EM und einem
/Decodierer zum genannten Serienparallelwandler SP bzw. zu einer der Anschlußstelle zugeordneten
Verzögerungseinrichtung VE. Diese Verzögerungseinrichtung ist erforderlich um ein Ändern    empfangener
und am vorbeifließenden Bitstrom der z.B. um 16 bis 24
Bit verzögert wird, vornehmen zu können.

Die über den Serien-Parallelwandler der Protokollsteuerung für die Zugriffskennzeichnung zugeführten Informationen werden parallel verschiedenen Einrichtungen zugeführt. Ebenso werden dem Parallel-Serienwandler von verschiedenen entsprechenden Einrichtungen die Informationen für die Weitergabe zugeleitet. Über den Decoder PAE wird ein Datenpaketanfang bzw. ein Datenpaketende festgestellt. Ferner wird eine im Datenpaket vorhanden Adresse der sendenden Stelle im Adressenspeicher AR aufgenommen und in einem angeschalteten Adressvergleicher AV wird festgestellt ob das empfangene Datenpaket für die entsprechende Anschlußstelle bestimmt ist bzw. ob dieses Datenpaket zur Aktualisierung der Frei-/Besetzttabelle dient. Über den Speicher CR und die Feststelleinrichtung CD wird das Zugriffskennzeichen erkannt und seine Löschung über den weiteren Steuerspeicher CRR veranlaßt. Der Empfangsdatenspeicher EDS wertet das empfangene Datenpaket in Zusammenarbeit mit dem angeschalteten Mikroprozessor MP aus. Wenn zusätzliche Daten im Datenpaket zu übertragen sind. bzw. alle zu sendenden Daten eines Datenpaketes einer sendenden Anschlußstelle werden über den Sende-Datenspeicher SDS und den Parallelserienwandler PS , der Sendeschaltung SSC ‿und des Decodierers‿ dem Datenübertragungsleitungsbündel, d.h. dem Lichtwellenleiter und damit dem Ring zugeleitet. Zusätzlich einzugebenden Adressinformationen werden über den Adressenspeicher ARR und andere Informationen, die die Kennzeichnung des Anfangs- bzw. des Endes des Datenpaketes betreffen werden über die Einrichtung PAE',erzeugt.

In der FIG 7 ist die allen Grundringen und damit allen an einem Grundring angeschlossenen Anschlußstellen gemeinsame Rahmenausgleichseinheit dargestellt. Diese Rahmenausgleichseinheit dient dazu in einem rahmensynchronen System zu gewährleisten, daß die gesamte Umlaufzeit einschließlich aller Verzögerungen in den angeschalteten Anschlußstellen ein ganzzahliges Vielfaches der Rahmendauer ergibt., d.h. also keine beliebigen Verschiebungen der Rahmen zuläßt ., sondern die
Rahmen in einem festen Zeitprogramm passen. Für
diese Rahmenausgleichseinheit gibt es einen integrierten LSJ-Baustein, der diese Funktion vollautomatisch
ausführt. Diese Rahmenausgleichseinheit dient gleichzeitig auch als zentraler Taktgeber für die angeschlossenen Anschlußstellen. Die Rahmenausgleichseinheit kann
einer Anschlußstelle aller vorhandenen Anschlußstellen
zugeordnet werden, die Funktionen sind aber dann nicht
von Einfluß auf die einzelnen Funktionen der betreffenden Anschlußstelle.

Aus der FIG 7 geht hervor, daß der Rahmenausgleichsbaustein eine Dateneingabeeinrichtung DEE hat, welcher
nicht nur die Daten über den Lichtwellenleiter zugeführt werden, sondern auch einen Empfangstakt LT, der
aus dem empfangenen Takt abgeleitet wird. Die eintreffenden Daten werden über die Datenempfangseinrichtung DEE der Rahmensynchronwort-Erkennungseinrichtung
RSE zugeleitet. In dieser Einrichtung werden die Synchronpulse über die Leitung 1 geführt, nachdem über
die Leitung 2 die Synchronfehlpulse erkannt worden
sind. Eine Überwachungseinrichtung UE überwacht die
Funktion der Rahmensynchronwort-Erkennungseinrichtung
RSE und meldet dies einem angeschalteten Mikroprozessor.
Über einen Halbrahmen-Zwischenspeicher HR und einen
Vollrahmenzwischenspeicher VR, in denen die Informationen
in Abhängigkeit von Befehlen, die über die Überwachungseinrichtung UE und den Mikroprozessor zur Steuerung Ste
gegeben werden/die sind Daten eines Halbrahmens bzw. eines
Vollrahmens zwecks Verzögerung und Einpassung in den
richtigen Takt zwischenspeicherbar. Die Ausgabe
erfolgt in Abhängigkeit des für den Sendevorgang
erforderlichen Taktes ST der von einem festen Taktgenerator geliefert wird. Über die Daten-

ausgabeeinrichtung DAE laufen die Daten im Ring weiter.

8 Patentansprüche
7 Figuren

Patentansprüche

1. Verfahren für eine Fernmelde-, insbesondere Fernsprechnebenstellenanlage, mit einem Datenübertragungsleitungssystem, insbesondere mit einem optischen Datenübertragungsleitungssystem, und mit unterschiedlichen Anschlußstellen, insbesondere mit Teilnehmeranschlußstellen, mit Verbindungsleitungsübertragungen und mit Endgeräten, welche alle für die Informationsübertragung zwischen zumindest zwei anschaltbaren Anschlußstellen unterschiedliche Verkehrseigenschaften hinsichtlich der Datenübertragungsmenge und -geschwindigkeit, sowie hinsichtlich des Übertragungsverfahrens, beispielsweise kontinuierliches Übertragungsverfahren (sogenanntes Stream-Verfahren) und/oder Paketverfahren (Burst-Verfahren) aufweisen und wobei zumindest das erste Verfahren auf dem Zeitschlitzverfahren beruht, bei dem periodisch sich wiederholende Zeitschlitze zu einem, eine bestimmte Datenmenge in einer vorgegebenen Zeit (z.B.1024 Bit in 125µs)zu übertragenden Pulsrahmen, in dem für diese die zeitliche Lage eindeutig definiert ist, zusammengefaßt werden und wobei die in den unterschiedlichen Verfahren übertragenen Daten über ein mit allen unterschiedlichen Anschlußstellen, insbesondere Teilnehmerstellen, Verbindungsleitungsübertragungen und Endgeräten, verbundene, gemeinsame Datenübertragungsleitungsbündel ausgetauscht werden, wozu über das Datenübertragungsleitungsbündel kontinuierlich eine ununterbrochene Folge von durch Anfangs- bzw. Endekennzeichen definierten, dem Pulsrahmen entsprechenden Speichervolumen den Anschlußstellen zur Verfügung stellbar ist, d a d u r c h   g e k e n n - z e i c h n e t , daß ein derartiger Pulsrahmen (K in FIG 2) in wenigstens zwei Unterrahmen (US, UB) unterteilt wird, wobei die in den unterschiedlichen Unterrahmen (US, UB) zu übertragenden Datenmengen beliebig aufgeteilt

0118767

83 P 1068 E

sind und im ersten Unterrahmen (US) die von den Zeitschlitzen (1 bis m) gebildeten Einzeldatenkanäle voneinander unabhängig und für kontinuierlichen, nicht paketierten Datenaustausch, insbesondere Sprachübertragung, über das entsprechende Datenübertragungsleitungsbündel (z.B. FIG 1) belegbar sind, während im zweiten Unterrahmen (UB) die Zeitschlitze (n-m) einen einzigen Datenkanal für die Übertragung von Datenpaketen über dasselbe Datenübertragungsleitungsbündel bilden und wobei ferner die Belegung von Zeitschlitzen (Zeitkanälen) im ersten Unterrahmen durch eine Anschlußstelle in Abhängigkeit von in einem der beiden Unterrahmen übertragenen Informationen für den Frei- bzw. Belegt-Zustand der vorhandenen Zeitschlitze (Zeitkanäle) des ersten Unterrahmens erfolgt.

2. Verfahren nach Anspruch 1, d a d u r c h   g e - k e n n z e i c h n e t , daß in einem einzigen Einzeldatenkanal (UB) aller     der einer Anschlußstelle in einem bestimmten Zeitzyklus angebotenen Einzelkanäle in dem entsprechenden Unterrahmen (UB)   · ein einen Zugriff zu dem zweiten, als Einzeldatenkanal ausgebildeten Unterrahmen (UB) angebotenes Zugriffskennzeichen (token) in der einer, einen Verbindungsaufbau anfangenden bzw. eine Verbindung beendenden Anschlußstelle zugeordneten Anschlußschaltung (AS1) eine Eingabe von Dateninformationen im zweiten, als Einzeldatenkanal betriebenen Unterrahmen (UB), welche die Belegung bzw. die Freigabe eines Zeitschlitzes (beispielsweise Zeitkanal m-1) im ersten Unterrahmen (US) kennzeichnen und welche Dateninformationen über das gemeinsame Datenübertragungsleitungsbündel von Anschlußstelle zu Anschlußstelle zwecks Aktualisierung einer, die Frei-/Belegtzustände der Zeitschlitze im ersten Unterrahmen (US) beinhaltenden Tabelle überträgt, mittels der dieser Anschlußschaltung (AS1) zugeordneten Schaltmittel veranlaßt.

3. Verfahren nach Anspruch 1, d a d u r c h   g e -
k e n n z e i c h n e t , daß in einem einzigen Datenkanal der einer Anschlußstelle in einem bestimmten
Zyklus angebotenen Datenkanäle ein einen Zugriff zu
einem bestimmten Zeitschlitz (Zeitkanal) der Vielzahl
im ersten Unterrahmen vorhandenen Zeitschlitze (Zeitkanäle) für die Herstellung von kontinuierlich für
bestimmte Zeit durch zwei bzw. mehr als zwei Anschlußstellen für Nachrichtenaustausch, insbesondere Sprache,
Video und dergleichen, belegbaren Übertragungswege ermöglichendes Zugriffszeichen (token) in der einer, einen
Verbindungsaufbau anfangenden bzw. beendenden Anschlußstelle zugeordneten Anschlußschaltung (AS1) die Eingabe von Dateninformationen in diesem ganz bestimmten
Zeitschlitz die Belegung bzw. die Freigabe eines Zeitschlitzes (beispielsweise m-1) der genannten mehreren,
anderen Zeitschlitze im ersten Unterrahmen (US) steuert

und dabei Dateninformationen auch zu allen
bzw. nur zu bestimmten an das gemeinsame Datenübertragungsleitungsbündel angeschalteten Anschlußstellen
zwecks Aktualisierung einer, die Frei-/Belegtzustände
der genannten Zeitschlitze im ersten Unterrahmen beinhaltenden Tabelle übertragen werden.

4. Verfahren nach einem der Ansprüche 2, 3, d a -
d u r c h   g e k e n n z e i c h n e t , daß die
Belegung eines Zeitschlitzes (Zeitkanal) nur bei
Wiedereintreffen der eingegebenen Informationen betreffend der Belegung bzw. Freigabe eines Zeitschlitzes
an der ursprünglich eingebenden Anschlußstelle zur
endgültigen Belegung bzw. zur endgültigen Freigabe
des betreffenden Zeitschlitzes führt.

5. Verfahren nach Anspruch 4, d a d u r c h   g e -
k e n n z e i c h n e t , daß erst nach der endgültigen Belegung bzw. Freigabe eines Zeitschlitzes
des ersten Unterrahmens bzw. des Einzelkanals des zweiten Unterrahmens die entsprechenden Informationen für eine Aktualisierung der Frei-/Belegtzustände an den betreffenden Anschlußstellen wirksam schaltbar sind.

6. Verfahren nach Anspruch 1, d a d u r c h  g e - k e n n z e i c h n e t , daß den beiden genannten Unterrahmen (US, UB) zumindest ein Informationsbit zur Steuerung der an sich bekannten Rahmensynchronisation gemeinsam vorgeordnet wird.

7. Verfahren nach Anspruch 1, d a d u r c h  g e - k e n n z e i c h n e t , daß die vorhandenen Teilnehmerstellen und/oder Verbindungsleitungsübertragungen und Endgeräte zu Gruppen zusammengefaßt sind und nur bei einer bzw. bei einigen wenigen dieser Stellen ein Speicher zur Aufnahme der Tabelleninformationen für belegte und/oder freie Zeitschlitze (Zeitkanäle) vorhanden ist und bei jeder Teilnehmerstelle bzw. Verbindungsleitungsübertragung bzw. bei jedem Endgerät ohne vorhandene Tabelle gekennzeichnet ist, bei welcher Stelle bei Belegen eines freien Zeitschlitzes (Zeitkanals) die Tabelle für die Zustandsfeststellung des zu belegenden Zeitschlitzes (Zeitkanals) zur Verfügung steht.

8. Verfahren nach Anspruch 1, d a d u r c h  g e - k e n n z e i c h n e t , daß die als Datenpaket von einer Anschlußstelle zu übertragenen Informationen über eine beliebige Anzahl in aufeinanderfolgenden Pulsrahmen vorhandenen zweiten Unterrahmen und somit Einzeldatenkanäle aufteilbar sind.

## FIG 1

Anschlußstelle

RE

## FIG 3

| | | | | | | | | | | |
|---|---|---|---|---|---|---|---|---|---|---|
| 1 | 2 | 3 | | m-1 | m | m+1 | | n-1 | n | 1 |

Rahmen K    Rahmen (K+1)

m-1    n-m

R   1.Unterrahmen   2.Unterrahmen   R

## FIG 4

| R | SIG | SK1 | SK2 | | SK 62 | Einzeldaten- | kanal | R |
|---|-----|-----|-----|--|-------|--------------|-------|---|

Rahmen n    Rahmen

1.UR    2.UR

FIG 2

a Zugriffskennz.

b Daten

c

d Zugriffskennz.

FIG 5

FIG 7

FIG 6

0118767

4/4